(19) Europäisches Patentamt
European Patent Office
Office européen des brevets

(11) **EP 2 714 459 B1**

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(21) Anmeldenummer: **12728422.2**

(22) Anmeldetag: **24.05.2012**

(51) Int Cl.:
*B60L 11/18* (2006.01)      *H02J 5/00* (2016.01)
*H02J 7/02* (2006.01)      *B60L 5/00* (2006.01)

(86) Internationale Anmeldenummer:
**PCT/EP2012/059703**

(87) Internationale Veröffentlichungsnummer:
**WO 2012/160136 (29.11.2012 Gazette 2012/48)**

(54) **VERFAHREN ZUR ERKENNUNG EINES ELEKTRISCH LEITFÄHIGEN FREMDKÖRPERS UND VORRICHTUNG ZUR INDUKTIVEN ÜBERTRAGUNG ELEKTRISCHER ENERGIE**

METHOD FOR DETECTING AN ELECTRICALLY CONDUCTIVE FOREIGN BODY AND DEVICE FOR INDUCTIVELY TRANSMITTING ELECTRICAL ENERGY

PROCÉDÉ DE DÉTECTION D'UN CORPS ÉTRANGER ÉLECTROCONDUCTEUR ET DISPOSITIF DE TRANSFERT INDUCTIF D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.05.2011 DE 102011050655**

(43) Veröffentlichungstag der Anmeldung:
**09.04.2014 Patentblatt 2014/15**

(73) Patentinhaber: **Conductix-Wampfler GmbH 79576 Weil am Rhein (DE)**

(72) Erfinder:
• **WECHLIN, Mathias 79400 Kandern (DE)**
• **ASSELIN, Pascal F-68400 Riedisheim (FR)**

(74) Vertreter: **Charrier Rapp & Liebau Patentanwälte Fuggerstrasse 20 86150 Augsburg (DE)**

(56) Entgegenhaltungen:
WO-A1-2005/109597      WO-A1-2005/109598
DE-U1-202009 009 693      KR-B1- 100 992 480

**Beschreibung**

Die Erfindung betrifft ein Verfahren zur Erkennung eines elektrisch leitfähigen Fremdkörpers an einer Vorrichtung zur induktiven Übertragung elektrischer Energie nach dem Oberbegriff des Anspruchs 1 sowie eine entsprechende Vorrichtung nach dem Oberbegriff des Anspruchs 12. Vorrichtungen besagter Art dienen der induktiven Ladung einer in einem Elektrofahrzeug eingebauten, wiederaufladbaren Batterie. Während der Energieübertragung wird zwischen einer stationären Primärspule und einer fahrzeugseitigen Sekundärspule ein magnetisches Feld hoher Feldstärke und Flussdichte aufgebaut. Dies ist notwendig, um in der Sekundärspule einen für die angestrebte Übertragungsleistung ausreichend hohen Strom zu induzieren.

Werden Gegenstände aus metallischen Werkstoffen in den Bereich eines solchen Feldes eingebracht, so werden in diesen Wirbelströme induziert, die zu einer von Material, Dauer der Einbringung und Höhe der Feldstärke abhängigen Erwärmung führen. Bei Vorhandensein entsprechender Bedingungen kann ein solcher Gegenstand eine Temperatur erreichen, die zu Beschädigungen, z.B. zum Einschmelzen in Kunststoffoberflächen, oder zu Gefährdungen von Personen führen können. Letztere treten insbesondere dann auf, wenn die Sekundärseite entfernt wurde und erwärmte Metallgegenstände frei zugänglich sind und von Personen berührt werden können.

Aufgrund der Charakteristik bisheriger Anwendungen für induktive Energieübertragungssysteme wurde eine entsprechende Gefährdung durch metallische Fremdkörper als nicht relevant bewertet oder beispielsweise bei Flurförderzeugen (AGV) durch vor den sekundärseitigen Abnehmern angebrachte Bürsten versucht, solche Gegenstände aus kritischen Feldbereichen zu entfernen. Bei Fahrzeugen mit Fahrer kann im Rahmen einer Schulung darauf hingewiesen werden, im Betrieb auf solche Gegenstände zu achten und diese vor Inbetriebnahme der induktiven Übertragung zu entfernen oder die induktive Übertragung im Zweifelsfall nicht in Betrieb zu nehmen. Für einen weitgehend automatischen Betrieb oder bei höheren Sicherheitsanforderungen, von denen insbesondere beim Einsatz derartiger Systeme in öffentlich zugänglichen Bereichen auszugehen ist, erscheinen die bisherigen Sicherheitsmaßnahmen als ungeeignet oder zumindest unzureichend.

Aus der WO 2009/081115 A1 ist ein Verfahren zur Erkennung eines elektrisch leitfähigen Fremdkörpers an einer Vorrichtung zur induktiven Übertragung elektrischer Energie bekannt, bei dem zeitweilig die Primärspannung erhöht und die Reaktion des Systems beobachtet wird. Normalerweise erfolgt in diesem Fall infolge einer sekundärseitigen Leistungsregelung, welche die übertragene Leistung konstant hält, eine entsprechende Reduzierung des Primärstromes. Ein leitfähiger Fremdkörper an der Primärspule sorgt jedoch in diesem Fall durch seine Verlustleistungsaufnahme für eine Erhöhung der Primärleistung und kann anhand dieser erkannt werden. Bei Erkennung eines Fremdkörpers wird die Primärspannung abgeschaltet, um eine Erhitzung des Fremdkörpers zu vermeiden. Als problematisch erscheint an diesem Stand der Technik, dass ein kleiner Fremdkörper schwer zu detektieren ist, da die Primärspannung gegenüber ihrem Nennwert nicht wesentlich erhöht werden kann.

Aus der WO 2005/109598 A1 ist ein System zur induktiven Übertragung elektrischer Energie zu tragbaren elektronischen Geräten wie mobilen Kommunikationsgeräten bekannt, bei dem zur Detektion einer fehlenden sekundärseitigen Last oder einer parasitären Last in Form eines Fremdkörpers die primärseitige Leistungszufuhr kurz unterbrochen und der zeitliche Verlauf des Abklingens der in der Schaltung gespeicherten Energie gemessen wird. Bei Erkennung einer fehlenden sekundärseitigen Last oder einer parasitären Last in Form eines Fremdkörpers anhand des Abklingvorgangs geht das System in einen Bereitschafts- bzw. Abschaltzustand über, in dem die Leistungszufuhr lediglich noch in periodischen Abständen kurzzeitig eingeschaltet wird, um erneut einen Abklingvorgang auszulösen und dadurch zu überprüfen, ob der Zustand, der zum Übergang in den Bereitschafts- bzw. Abschaltzustand geführt hat, fortbesteht oder sich geändert hat. Der Bereitschaftszustand und der Abschaltzustand unterscheiden sich lediglich dadurch, dass im Abschaltzustand an einer Benutzerschnittstelle eine Aufforderung zur Entfernung einer parasitären Last ausgegeben wird.

Aus der WO 2005/109597 A1 ist ein ähnliches System bekannt, bei dem die Entscheidung zum Übergang in den Bereitschafts- oder Abschaltzustand anhand eines Vergleichs zwischen der primärseitigen Leistungsabgabe und dem sekundärseitigen Leistungsbedarf getroffen wird. Hierzu muss der Primärseite eine Information über den sekundärseitigen Leistungsbedarf übermittelt werden. Das Verhalten der Primärseite im Bereitschafts- und Abschaltzustand entspricht dem zuvor genannten Stand der Technik, d.h. es findet lediglich in periodischen Abständen eine kurzzeitige primärseitige Leistungszufuhr statt, um festzustellen, ob der zuletzt erkannte Systemzustand fortbesteht oder sich geändert hat und der Bereitschaftszustand und der Abschaltzustand unterscheiden sich lediglich durch eine Anzeige an einer Benutzerschnittstelle.

Der Erfindung liegt die Aufgabe zugrunde, eine neue Lösung zur Behandlung des Problems der Anwesenheit eines elektrisch leitfähigen Fremdkörpers im Bereich eines induktiven Energieübertragungssystems aufzuzeigen, die zur Verbesserung der Betriebssicherheit und der Zuverlässigkeit eines solchen Systems beiträgt.

Diese Aufgabe wird erfindungsgemäß durch ein Verfahren mit den Merkmalen des Anspruchs 1 sowie eine entsprechende Vorrichtung mit den Merkmalen des Anspruchs 13 bzw. des Anspruchs 14 gelöst. Vorteilhafte Ausgestaltungen sind in den Unteransprüchen angegeben.

Erfindungsgemäß wird zunächst elektrische Leistung aus einer Stromversorgungseinheit in die Primärspule eingespeist, diese Einspeisung unterbrochen und der zeitliche Verlauf des dadurch verursachten Abklingens einer elektrischen Betriebsgröße der Primärspule gemessen. Mindestens ein Parameter des gemessenen Verlaufs wird mit einem entsprechenden Parameter eines Referenzverlaufs, der zuvor ohne Vorhandensein eines elektrisch leitfähigen Fremdkörpers ermittelt wurde, verglichen. Anhand dieses Vergleichs wird festgestellt, ob ein elektrisch leitfähiger Fremdkörper im Bereich des von der Primärspule erzeugten Magnetfeldes vorhanden ist. Auf diese Weise kann das Vorhandensein eines leitfähigen Fremdkörpers mit hoher Genauigkeit detektiert werden, da ein solcher Abklingvorgang ohne leitfähigen Fremdkörper im wesentlichen nur durch die geringen Verluste der Primärspule bestimmt wird und daher bereits durch die Präsenz eines kleinen Fremdkörpers deutlich verändert wird.

Das erfindungsgemäße Verfahren und die erfindungsgemäße Vorrichtung erlauben es jedoch nicht nur festzustellen, ob überhaupt ein Fremdkörper vorhanden ist oder nicht, sondern darüber hinaus aus dem zeitlichen Verlauf des Abklingens der gemessenen elektrischen Betriebsgröße ein Maß für die Leistung zu ermitteln, die durch den Fremdkörper beim normalen Betrieb der Vorrichtung aufgenommen wird. Anhand dieses Leistungsmaßes kann dann die in die Primärspule eingespeiste Leistung so weit reduziert werden, dass die durch den Fremdkörper aufgenommene Leistung unterhalb einer vorbestimmten Schwelle bleibt. Hierdurch wird ein Notbetrieb ermöglicht, bei dem die Leistung so weit vermindert ist, dass die Leistungsaufnahme des Fremdkörpers keine Gefahr darstellt und toleriert werden kann. Dies ist im Hinblick auf die Anwendung zum Laden der Batterie eines Elektrofahrzeugs von großem Vorteil, weil auf diese Weise die Ladefunktion zumindest noch teilweise erfüllt werden und die Mobilität des Fahrzeugs in vielen Fällen erhalten werden kann.

Zweckmäßig ist es, wenn der als Entscheidungskriterium herangezogene Parameter eine relative Änderung der gemessenen elektrischen Betriebsgröße innerhalb eines vorbestimmten Zeitintervalls seit der Unterbrechung der Leistungseinspeisung oder die Länge des Zeitintervalls seit der Unterbrechung der Leistungseinspeisung bis zum Erreichen einer vorbestimmten relativen Änderung der gemessenen elektrischen Betriebsgröße ist. Durch die Betrachtung relativer Änderungen wird die Abhängigkeit von Absolutwerten elektrischer Betriebsgrößen, die von vielen Faktoren beeinflusst werden und langfristig infolge von Alterungsprozessen driften können, vermieden.

Sehr zweckmäßig ist es ferner, den Einfluss der Sekundärseite auf die Fremdkörpererkennung an der Primärspule zu minimieren, da dies insbesondere eine periodische Fremdkörpererkennung mit hoher Genauigkeit während des laufenden Betriebs der Energieübertragung zur Sekundärseite ermöglicht. Hierzu wird erfindungsgemäß vor der Unterbrechung der Leistungseinspeisung in die Primärspule sekundärseitig die Leistungsabgabe von der Sekundärspule an den Verbraucher unterbrochen und somit ein Einfluss des Verbrauchers auf den Abklingvorgang einer primärseitigen Betriebsgröße eliminiert.

Weitere besonders vorteilhafte Maßnahmen sind den übrigen Unteransprüchen zu entnehmen.

Nachfolgend werden Ausführungsbeispiele der Erfindung anhand der Zeichnungen beschrieben. In diesen zeigt

Fig. 1     eine schematische Darstellung einer Vorrichtung zur induktiven Energieübertragung von einer Ladestation zu einem Elektrofahrzeug,

Fig. 2     ein Blockschaltbild der Primärseite einer Vorrichtung zur induktiven Energieübertragung,

Fig. 3     ein detaillierteres Schaltbild einiger Komponenten des Blockschaltbildes von Fig.1,

Fig. 4     einen beispielhaften Verlauf des Abklingens des Primärstromes bei Unterbrechung der Leistungseinspeisung ohne Vorhandensein eines leitfähigen Fremdkörpers,

Fig. 5     einen beispielhaften Verlauf des Abklingens des Primärstromes bei Unterbrechung der Leistungseinspeisung bei Vorhandensein eines leitfähigen Fremdkörpers,

Fig. 6     ein Teilschaltbild der Sekundärseite einer Vorrichtung zur induktiven Energieübertragung,

Fig. 7     eine zusammenfassende Darstellung des erfindungsgemäßen Verfahrens in Form eines Programmablaufplans.

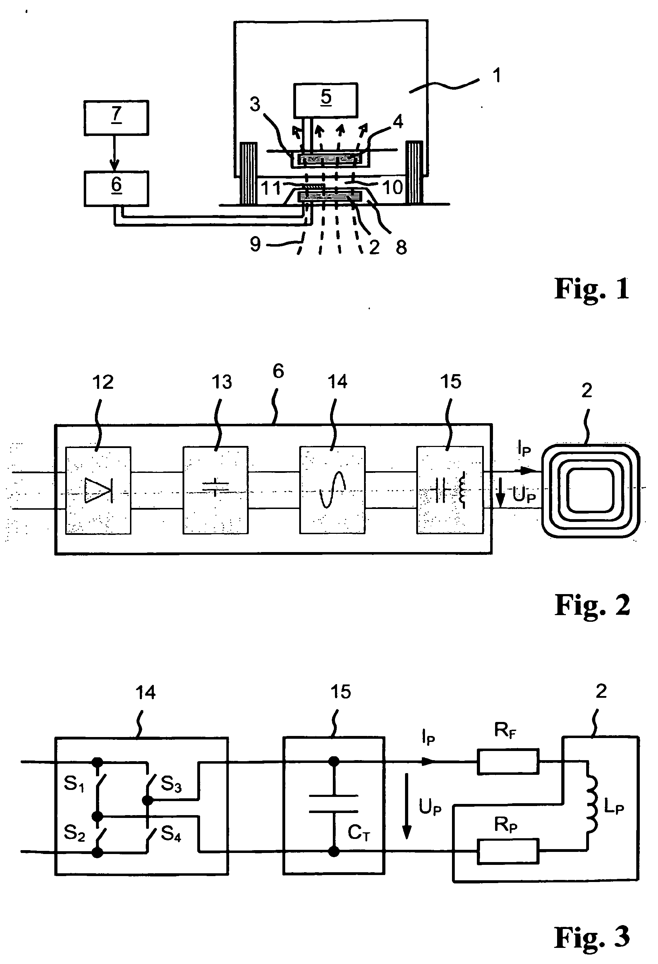

Fig. 1 zeigt ein Elektrofahrzeug 1, welches zum Aufladen seiner Batterie über der Primärspule 2 einer Ladestation steht, in einer schematischen Schnittansicht. An der Unterseite des Fahrzeugs 1 befindet sich in einem Gehäuse 3 eine Sekundärspule 4, die mit einer Ladeelektronik 5 als Verbraucher verbunden ist. Diese wandelt die Parameter der induktiv in die Sekundärspule 4 übertragenen elektrischen Leistung in zur Ladung der Batterie des Fahrzeugs 1 geeignete Werte. Die Primärspule 2 wird von einer Stromversorgungseinheit 6 der Ladestation gespeist und ist in einem Gehäuse 8 untergebracht, welches stationär an einem Fahrzeugabstellplatz angebracht ist. Die Stromversorgungseinheit 6 wird von einer Steuereinheit 7 der Ladestation gesteuert.

Gestrichelt sind in Fig. 1 einige Feldlinien 9 des von der Primärspule 2 im Betrieb erzeugten magnetischen Wechselfeldes angedeutet. Seine Hauptrichtung entspricht der Richtung der Spulenachse der Primärspule 2 und ist somit die Vertikalrichtung. In dem Zwischenraum 10 unmittelbar oberhalb des Gehäuses 8 der Primärspule 2 herrscht im Betrieb eine hohe magnetische Feldstärke und Flussdichte.

Auf dem Gehäuse 8 der Primärspule 2 liegt ein metallischer Fremdkörper 11. Dieser kann sich beispielsweise von einem anderen Fahrzeug, welches vor dem Fahrzeug 1 an der Ladestation gestanden hat, gelöst haben. Es könnte sich auch um einen von einer Person verlorenen Gebrauchgegenstand oder um eine leere Getränkedose handeln. Nicht zuletzt könnte der Fremdkörper 11 auch von einer Person in Sabotageabsicht absichtlich dort deponiert worden sein. Wie eingangs bereits dargelegt, würde sich der Fremdkörper 11 bei einer Bestromung der Primärspule 2 infolge der in ihm induzierten Wirbelströme erhitzen und dadurch zu einer Gefahrenquelle werden. Im übrigen würde durch ihn die Effizienz der Energieübertragung zu der Sekundärspule 4 beeinträchtigt.

Fig. 2 zeigt ein Blockschaltbild der Stromversorgungseinheit 6 von Fig. 1 mit daran angeschlossener Primärspule 2. Die Stromversorgungseinheit 6 enthält einen Gleichrichter 12, einen Gleichspannungs-Zwischenkreis 13, einen Umrichter 14 und eine Abgleichschaltung 15, die in der genannten Reihenfolge hintereinander geschaltet sind. Der Gleichrichter 12 ist an ein Stromversorgungsnetz angeschlossen und wandelt dessen Wechselspannung in eine Gleichspannung um, die in dem Zwischenkreis 13 geglättet und gepuffert wird. Die Zwischenkreisspannung wird durch einen Umrichter 14 in eine Wechselspannung vorbestimmter Frequenz umgewandelt, die über die Abgleichschaltung 15 an die Primärspule 2 geleitet wird. Die Abgleichschaltung 15 bildet zusammen mit der Primärspule 2 einen Schwingkreis und ist so dimensioniert, dass sich dieser Schwingkreis bei der durch den Umrichter 14 vorgegebenen Frequenz in Resonanz befindet.

Eine etwas detailliertere Darstellung eines Teils der Komponenten der Primärseite, nämlich des Umrichters 14, der Abgleichschaltung 15 und der Primärspule 2 zeigt Fig. 3. Der Umrichter 14 ist als H-Brücke mit vier Schaltern $S_1$ bis $S_4$ aufgebaut, die jeweils mit einer nicht gezeigten Freilaufdiode beschaltet sind. Die Abgleichschaltung 15 besteht in Fig. 3 lediglich aus einem einzigen Kondensator $C_T$, der parallel zum Ausgang des Umrichters 14 geschaltet ist. Tatsächlich kann die Abgleichschaltung 15 wesentlich komplexer aufgebaut sein und eine Vielzahl von Bauelementen einschließlich Induktivitäten enthalten, doch kommt es hier nur auf die Bildung eines Schwingkreises an, für die der einzelne Kondensator $C_T$ grundsätzlich ausreicht, der hier beispielhaft als Abgleichschaltung 15 angenommen wird.

Die Primärspule 2 enthält eine Primärinduktivität $L_P$ und in Serie dazu einen ohmschen Wicklungswiderstand $R_P$, der ohne Vorhandensein eines Fremdkörpers 11 den dominierenden Beitrag zur Gesamtverlustleistung des durch die Primärspule 2 und die Abgleichschaltung 15 gebildeten Schwingkreises liefert. Vernachlässigt werden hierbei Ummagnetisierungs- und Wirbelstromverluste, auch Eisenverluste genannt, in Feldführungselementen, die sowohl primärseitig, als auch sekundärseitig vorgesehen sein können. Die Frequenz, mit der die Schalter $S_1$ bis $S_4$ betätigt werden, ist auf die Resonanzfrequenz des Schwingkreises so abgestimmt, dass dieser in Resonanz betrieben wird.

Der weitere Widerstand $R_F$ in Serie zu der Primärspule 2 stellt ein einfaches Modell für den leitfähigen Fremdkörper 11 dar, der bei einer Bestromung der Primärspule 2 elektrische Leistung aufnimmt und in Wärme umsetzt. Ohne Vorhandensein des Fremdkörpers 11 ist der Wert von $R_F$ in Fig. 3 gleich Null. Um den Fremdkörper 11 zu detektieren, könnte man beispielsweise die Primärleistung und die Sekundärleistung des gesamten Systems messen und durch Differenzbildung die durch den Fremdkörper 11 verursachte Verlustleistung ermitteln. Da jedoch beim Laden eines Elektrofahrzeugs 1 im Gegensatz zum Laden von Kleingeräten wie z.B. Mobiltelefonen oder Elektrozahnbürsten eine relativ große Leistung übertragen werden muss, wäre eine solche Lösung mit einer großen Ungenauigkeit behaftet, da zwei relativ große Leistungswerte gemessen und voneinander subtrahiert werden müssten.

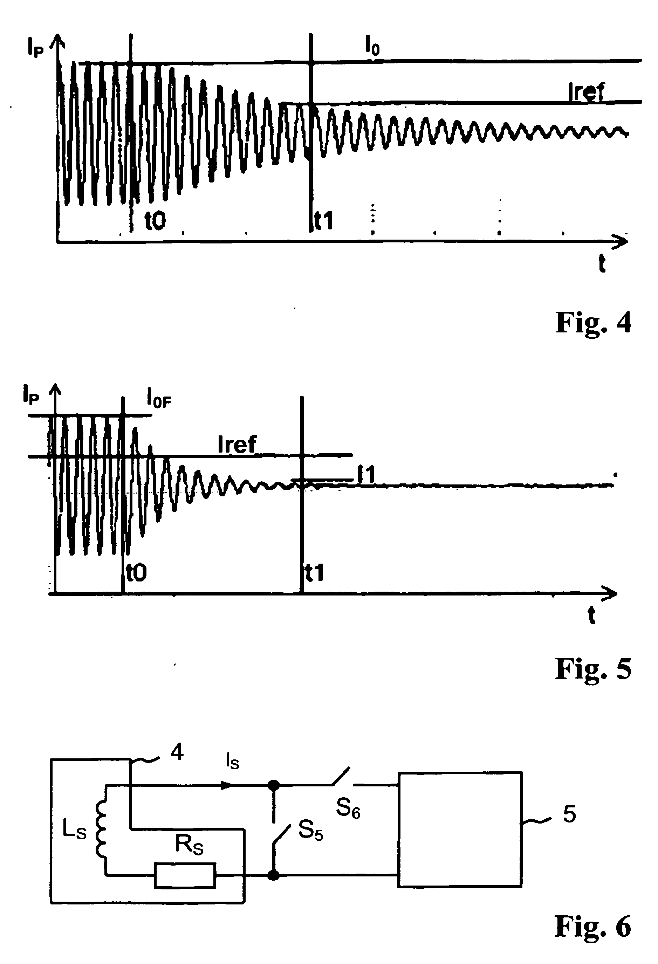

Um bei der Fremdkörpererkennung eine hohe Genauigkeit zu erzielen, wird erfindungsgemäß die Leistungseinspeisung in die Primärspule 2 durch den Umrichter 14 völlig unterbrochen und das sich daraus ergebende Abklingen des Primärstromes $I_P$ oder der Primärspannung $U_P$ gemessen. Es versteht sich, dass dies nach Beginn einer Bestromung der Primärspule 2 sehr bald geschehen muss, d.h. bevor sich ein Fremdkörper 11 so weit erhitzen kann, dass er zu einer Gefahr wird. Die Ergebnisse solcher Messungen des Primärstromes $I_P$ sind in den Figuren 4 und 5 für zwei verschiedene Fälle, nämlich in Fig. 4 ohne Vorhandensein eines Fremdkörpers 11, d.h. für $R_F=0$, und in Fig. 4 bei Vorhandensein eines Fremdkörpers 11, d.h. für $R_F \neq 0$ dargestellt. Der Primärstrom $I_P$ hat zum Zeitpunkt $t_0$ der Unterbrechung der Leistungseinspeisung aus dem Umrichter 14 im ersten Fall den Wert $I_0$, im zweiten Fall den Wert $I_{0F}$.

Wie beide Figuren zeigen, hat der Primärstrom $I_P$ jeweils den Verlauf einer abklingenden Schwingung. Deren Hüllkurve $I_{PH}(t)$ ist bekanntlich durch eine abklingende Exponentialfunktion $I_{PH}(t) = I_0 \cdot \exp[-(t-t_0)/\tau]$ bzw. $I_{PH}(t) = I_{0F} \cdot \exp[-(t-t_0)/\tau]$ gegeben, deren Zeitkonstante $\tau = (2L_P)/(R_P+R_F)$ ist. Bei Vorhandensein eines Fremdkörpers 11, also für $R_F \neq 0$, ist die Abklingzeitkonstante kleiner, d.h. der Primärstrom $I_P$ klingt schneller ab, als ohne Fremdkörper 11. Der in Fig. 4 dargestellte Verlauf des Primärstromes $I_P$ ist ein Referenzverlauf, der einmalig ohne Vorhandensein eines Fremdkörpers 11, also für $R_F=0$ gemessen und gespeichert wird, wobei nicht der gesamte Zeit verlauf, sondern nur charakteristische Parameter desselben wie $I_0$, $I_{ref}$ und $\Delta t = t_I - t_0$ gespeichert zu werden brauchen, wobei $I_0$ der Startwert der Hüllkurve von $I_P$ zum Zeitpunkt $t_0$ der Unterbrechung der Leistungseinspeisung, und $I_{ref}$ der Wert der Hüllkurve von $I_P$ zum Zeitpunkt $t_I$ ist.

Es versteht sich, dass trotz Unterbrechung der Primärleistungszufuhr der Primärstrom $I_P$ weiterhin fließen können muss, damit ein durch die zusätzliche Verlustleistung eines eventuell vorhandenen Fremdkörpers 11 beeinflusster Abklingvorgang von $I_P$ stattfinden kann. Abhängig von der internen Topologie der Abgleichschaltung 15 kann dies bedeuten, dass durch die Schalter $S_1$ bis $S_4$ des Umrichters 14 ein geschlossener Strompfad für den Abklingvorgang geschaffen werden muss. Wenn beispielsweise der Abgleichkondensator $C_T$ nicht parallel, sondern in Serie zu der Primärspule 2 liegen würde, dann könnte durch einen geschlossenen Zustand der Schalter $S_2$ und $S_4$ bei geöffnetem Zustand der Schalter $S_1$ und $S_3$ trotz Unterbrechung der Leistungseinspeisung aus dem Umrichter 14 ein geschlossener Stromkreis für den aus der Primärspule 2, dem seriellen Abgleichkondensator $C_T$ und ggf. dem Fremdkörperwiderstand $R_F$ bestehenden Schwingkreis bereitgestellt werden.

Um das Vorhandensein eines Fremdkörpers 11 festzustellen, kann der Wert $I_1$ des Primärstromes $I_P$ nach Ablauf eines vorbestimmten Zeitintervalls $\Delta t = t_1 - t_0$ seit Unterbrechung der Leistungseinspeisung aus dem Umrichter 14 mit dem ohne Vorhandensein eines Fremdkörpers 11 gemessenen Referenzwert $I_{ref}$ verglichen werden, wobei $I_1 < I_{ref}$ das Vorhandensein eines Fremdkörpers 11 anzeigt. Alternativ kann die Länge des Zeitintervalls zwischen der Unterbrechung der Leistungseinspeisung zum Zeitpunkt $t_0$ und dem Erreichen des Referenzwertes $I_{ref}$ durch den Primärstromes $I_P$ mit dem Referenzzeitintervall $\Delta t = t_1 - t_0$ verglichen werden, wobei ein kürzeres Zeitintervall als $\Delta t$ das Vorhandensein eines Fremdkörpers 11 anzeigt. Diese Vorgehensweise ist zulässig, wenn der Ausgangswert $I_{0F}$ des Primärstromes bei Unterbrechung der Leistungseinspeisung in Fig. 5 exakt mit dem entsprechenden Wert $I_0$ des Referenzverlaufs in Fig. 4 übereinstimmt.

In der Praxis kann es allerdings vorkommen, dass der Ausgangswert $I_{0F}$ des Primärstromes $I_P$ bei Unterbrechung der Leistungseinspeisung in Fig. 5 etwas von dem entsprechenden Wert $I_0$ des Referenzverlaufs in Fig. 4 abweicht, d.h. dass der bei der Referenzmessung herrschende Betriebszustand des Systems später nicht mehr völlig exakt reproduzierbar ist. Daher ist es zu bevorzugen, die relative Änderung des Primärstromes $I_P$ zwischen den Werten $I_{0F}$ und $I_1$ mit der relativen Änderung zwischen den Werten $I_0$ und $I_{ref}$ bei der Referenzmessung zu vergleichen, d.h. anstelle der Absolutwerte $I_1$ und $I_{ref}$ jeweils die Verhältnisse $I_{0F}/I_1$ und $I_0/I_{ref}$ zu betrachten.

Die Ausgangswerte $I_0$ und $I_{0F}$ des Primärstromes $I_P$ müssen nicht unbedingt die vor der Unterbrechung der Leistungseinspeisung herrschenden Werte sein, wie es in den Figuren 4 und 5 dargestellt ist, sondern man könnte jeweils auch einen kurz nach der Unterbrechung der Leistungseinspeisung gemessenen Wert von $I_P$ als Ausgangswert verwenden, d.h. der Beginn des Zeitintervalls $\Delta t$ für die Messung des Abklingvorgangs des Primärstromes $I_P$ muss nicht der Zeitpunkt der Unterbrechung der Leistungseinspeisung sein, sondern er könnte auch kurz danach liegen. Wie aus den Figuren 4 und 5 ersichtlich ist, könnte auch in diesem Fall die Änderung des Abklingverhaltens durch das Vorhandensein eines Fremdkörpers 11 festgestellt werden.

Bei Feststellung eines Fremdkörpers 11 kann im einfachsten Fall die Leistungseinspeisung in die Primärspule 2, die für die Messung ohnehin unterbrochen wurde, unterbrochen bleiben und eine Anzeige aktiviert und/oder eine Meldung an eine übergeordnete Einheit und/oder den Benutzer des Elektrofahrzeugs 1 abgesetzt werden. Es ist jedoch auch möglich, dass ein Fremdkörper 11 eine Größe hat, die zwar bei einem Betrieb des Systems mit Nennleistung eine Gefahr darstellen würde, jedoch bei einem Betrieb mit verminderter Leistung tolerierbar wäre. In diesem Fall ist es von Interesse, einen solchen Betrieb mit verminderter Leistung zu ermöglichen, insbesondere dann, wenn eine rasche Beseitigung des Fremdkörpers 11 nicht als möglich erscheint.

Um einen Betrieb mit verminderter Leistung trotz Vorhandenseins eines Fremdkörpers 11 zu ermöglichen, muss die Größe des Fremdkörpers 11, d.h. seine Leistungsaufnahme bei normalem Betrieb mit Nennleistung, quantitativ ermittelt werden, damit die von dem Umrichter 14 abgegebene Leistung auf einen Wert abgesenkt werden kann, bei dem die Leistungsaufnahme des Fremdkörpers 11 keine Gefahr mehr darstellt. Diese quantitative Ermittlung der von einem Fremdkörper 11 aufgenommenen Verlustleistung kann anhand des Schaltungsmodells von Fig. 3 und der gemessenen Zeitverläufe gemäß den Figuren 4 und 5 erfolgen.

Aufgrund der Formel für den exponentiellen Verlauf der Hüllkurve des Primärstromes $I_P(t)$ gilt für den Referenzstromverlauf von Fig. 4:

$$I_{ref} = I_0 \exp[-(t_1 - t_0)/\tau_{ref}]$$

mit der Zeitkonstanten $\tau_{ref} = (2L_P)/R_P$
Hieraus kann der Wert von $R_P$ berechnet werden:

$$R_P = [2L_P/(t_1 - t_0)] \cdot [-\ln(I_{ref}/I_0)]$$

Analog gilt für den Stromverlauf mit vorhandenem Fremdkörper 11 von Fig. 5:

$$I_1 = I_{0F} \exp[-(t_1 - t_0)/\tau_1]$$

mit der Zeitkonstanten $\tau_1 = (2L_P)/(R_P + R_F)$
Hieraus kann die Summe $R_P + R_F$ berechnet werden:

$$R_P + R_F = [2L_P/(t_1 - t_0)] \cdot [-\ln(I_1/I_{0F})]$$

Damit ergibt sich für $R_F$ durch Subtraktion von $R_P$:

$$R_F = [2L_P /(t_1 - t_0)] \cdot \ln [(I_{ref} \cdot I_{0F}) / (I_1 \cdot I_0)]$$

Die in die Zeitkonstanten $\tau_{ref}$ und $\tau_1$ eingehende Induktivität $L_P$ der Primärspule 2 ist entweder bekannt, oder sie kann unter der Voraussetzung, dass $\omega L_P \gg R_P + R_F$ ist, näherungsweise als $L_P = U_P/(\omega I_P)$ ermittelt werden, wozu zusätzlich zum Primärstrom $I_P$ auch die Primärspannung $U_P$ gemessen werden muss.

Die durch einen Primärstrom $I_P$ mit dem Effektivwert $I_{Peff}$ in einem Fremdkörper 11 mit dem wirksamen Widerstand $R_F$ umgesetzte Verlustleistung $P_F$ beträgt:

$$P_F = R_F \cdot I_{Peff}^2$$

Wenn die maximal tolerierbare Verlustleistung eines Fremdkörpers 11 den Wert $P_{Fmax}$ hat, dann ergibt sich der maximal zulässige Effektivwert $I_{Pmax}$ des Primärstroms $I_P$ wie folgt:

$$I_{P\,max} = \sqrt{P_{F\,max} / R_F}$$

Einsetzen von $R_F$ ergibt:

$$I_{P\,max} = \sqrt{\dfrac{P_{F\,max}}{\dfrac{2L_P}{(t_1 - t_0)} \ln\left(\dfrac{I_{ref} \cdot I_{0F}}{I_1 \cdot I_0}\right)}}$$

Der Effektivwert des Primärstroms $I_P$ kann von dem Umrichter 14 durch die Ansteuerung der Schalter $S_1$ bis $S_4$ auf einen gewünschten Wert eingestellt werden. Auf diese Weise kann auch bei Vorhandensein eines leitfähigen Fremdkörpers 11 noch eine gegenüber der Nennleistung des Systems reduzierte Leistung übertragen werden. Beim Laden eines Elektrofahrzeugs 1 ist eine unvollständige Aufladung infolge eines verminderten Übertragungsleistung in jedem Fall dem völligen Verzicht auf eine Aufladung bei Vorhandensein eines Fremdkörpers vorzuziehen, um zumindest noch eine eingeschränkte Mobilität zu ermöglichen.

Wenn sich ein Elektrofahrzeug 1 bereits entsprechend Fig. 1 in Ladeposition befindet, dann können die Sekundärspule 4 und die Ladeelektronik 5 wegen der induktiven Kopplung der Sekundärspule 4 mit der Primärspule 2 den Verlauf des Primärstromes $I_P$ bei einer Unterbrechung der primärseitigen Leistungseinspeisung aus dem Umrichter 14 beeinflussen. Dieser Einfluss muss bei der Fremdkörpererkennung berücksichtigt, d.h. möglichst eliminiert oder zumindest minimiert werden.

Wie Fig. 6 zeigt, ist hierzu die Sekundärspule 4, die analog zur Primärspule 2 durch eine Sekundärinduktivität $L_S$ und in einen Serie zu dieser geschalteten Wicklungswiderstand $R_S$ dargestellt werden kann, mit der Ladeelektronik 5, die eine in Fig. 6 nicht dargestellte Abgleichschaltung zur Bildung eines Schwingkreises enthält, über zwei Schalter $S_5$ und $S_6$ verbunden, durch die ein Kurzschluss der Sekundärspule 4 hergestellt werden kann bzw. der Stromkreis zwischen der Sekundärspule 4 und der Ladeelektronik 5 unterbrochen werden kann.

Bei der Durchführung der erfindungsgemäßen Fremdkörpererkennung ist die in Fig. 6 gezeigte Schalterstellung, in der beide Schalter $S_5$ und $S_6$ offen sind, vorteilhaft, da in diesem Fall kein Sekundärstrom $I_S$ in der Sekundärspule 4 fließen kann. Hierdurch werden zusätzliche Verluste auf der Sekundärseite vermieden und die vorausgehenden Ausführungen unter Bezug auf die Figuren 3 bis 5 gelten uneingeschränkt. Es versteht sich dass zur Steuerung der sekundärseitigen Schalter $S_5$ und $S_6$ eine geeignete Kommunikationsverbindung zwischen der Steuereinheit 7 der Ladestation und einer entsprechenden Steuereinheit an Bord des Fahrzeugs 1 bestehen muss.

Alternativ kann die Sekundärspule 4 mittels des Schalters $S_5$ kurzgeschlossen werden. Auch hierdurch wird der Leistungsfluss zu der Ladeelektronik 5 unterbrochen, der Sekundärstrom Is kann jedoch weiter durch die Sekundärinduktivität $L_S$ und den Wicklungswiderstand $R_S$ fließen. Letzterer nimmt in diesem Fall eine Verlustleistung $P_S = R_S \cdot I_{Seff}^2$ auf, wobei $I_{Seff}$ der Effektivwert des Sekundärstromes $I_S$ ist. Da $I_{Seff}$ proportional zu $I_{Peff}$ ist, wirkt sich der sekundärseitige Wicklungswiderstand $R_S$ primärseitig wie ein zusätzlicher Widerstand $k \cdot R_S$ in Serie zum primärseitigen Wicklungswiderstand $R_P$ aus, wobei $k = I_{Seff}/I_{Peff}$ ein Proportionalitätsfaktor ist. In den vorausgehenden Formeln ist dann $R_P$ durch $R_P' = R_P + k \cdot R_S$ zu ersetzen. Ansonsten können die Fremdkörpererkennung und die Bestimmung des trotz eines Fremdkörpers 11 noch zulässigen Primärstromes $I_{Pmax}$ wie zuvor beschrieben erfolgen.

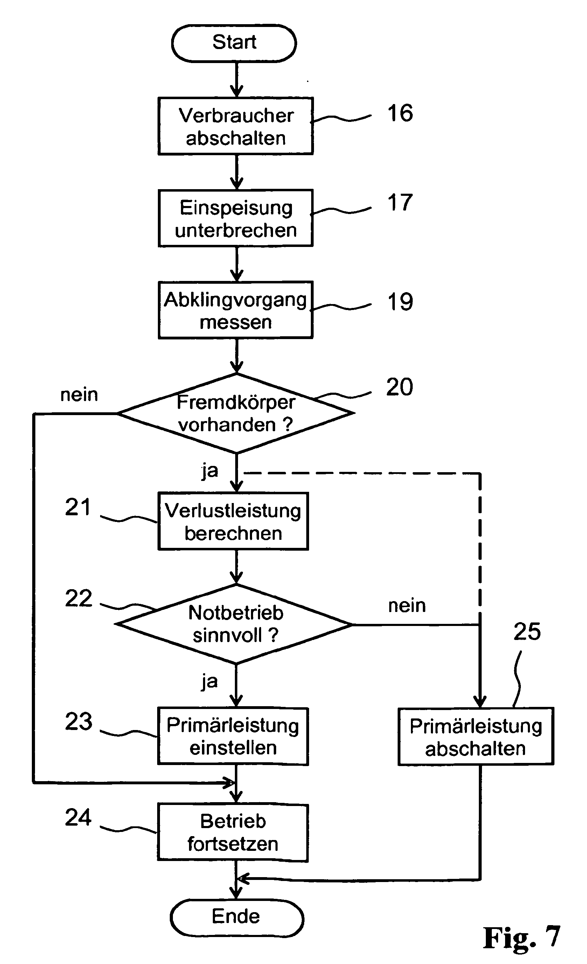

Einen zusammenhängenden Überblick über ein bevorzugtes Ausführungsbeispiel des erfindungsgemäßen Verfahrens gibt Fig. 7 in Form eines Programmablaufplans. Das Verfahren beginnt in Schritt 16 mit der Abschaltung des Verbrauchers, d.h. dass auf der Sekundärseite entweder beide Schalter $S_5$ und $S_6$ geöffnet werden, oder zuerst der parallel zur Sekundärspule 4 liegende Kurzschlussschalter $S_5$ geschlossen und dann der in dem zu der Ladeelektronik 5 führenden Stromkreis liegende Trennschalter $S_6$ geöffnet wird. Es versteht sich, dass Schritt 16 nur nötig ist, wenn eine Sekundärseite präsent ist.

Anschließend wird in Schritt 17 die Leistungseinspeisung vom Umrichter 14 in den aus der Abgleichschaltung 15 und der Primärspule 2 bestehenden Schwingkreis unterbrochen. In Schritt 19 wird sodann das Abklingen des Primärstromes $I_P$ gemessen. In Schritt 20 wird durch Vergleich der Abweichung des Verhältnisses $I_{0F}/I_1$ von dem Verhältnis $I_0/I_{ref}$ mit einem Schwellwert entschieden, ob ein elektrisch leitfähiger Fremdkörper 11 im Bereich des Magnetfeldes der Primärspule 2 vorhanden ist oder nicht.

Wenn der Vergleich in Schritt 20 positiv ausfällt, wird in Schritt 21 ein Maß für die Verlustleistungsaufnahme des Fremdkörpers 11 in Form seines Ersatzwiderstandes $R_F$ berechnet. Aufgrund des Ergebnisses dieser Berechnung wird im nachfolgenden Schritt 22 geprüft, ob ein Notbetrieb mit reduzierter Übertragungsleistung sinnvoll ist, d.h. ob noch eine signifikante Leistung übertragen werden kann. Wenn der Vergleich in Schritt 22 positiv ausfällt, wird in Schritt 23 die Primärleistung über den Umrichter 14 auf einen gegenüber dem Nennwert reduzierten Wert eingestellt, bei dem die Verlustleistungsaufnahme des Fremdkörpers noch tolerierbar ist.. Danach wird in Schritt 24 die Leistungseinspeisung aus dem Umrichter 14 in die Primärspule 2 wieder aufgenommen und der Verbraucher, d.h. die Ladeelektronik 5 wieder eingeschaltet, indem der Trennschalter $S_6$ geschlossen und der Kurzschlussschalter $S_5$ geöffnet wird. Die Fremdkörpererkennung und -behandlung ist damit beendet.

Die die Fortsetzung des Betriebs in Schritt 24 erfolgt unter Umgehung der Schritte 21 bis 23 dann sofort nach dem Schritt 20, wenn der Vergleich in Schritt 20 ein negatives Ergebnis hat, also kein Fremdkörper erkannt wird. Wenn in Schritt 22 entschieden wird, dass wegen der Größe des Fremdkörpers kein sinnvoller Notbetrieb mit reduzierter Leistung möglich ist, dann wird in Schritt 25 die Einspeisung von Primärleistung dauerhaft abgeschaltet. Alternativ zur Berechung der Verlustleistungsaufnahme des Fremdkörpers 11 in Schritt 21 kann bei einem positiven Vergleichsergebnis in Schritt 20 in einer vereinfachten Ausführungsform der Erfindung auch sofort zu Schritt 25 übergegangen und die Primärleistung grundsätzlich dauerhaft abgeschaltet werden. Diese Variante ist in Fig. 7 gestrichelt dargestellt.

In Fig. 7 nicht dargestellt ist die Aktivierung einer Anzeige und/oder das Absetzen einer Meldung an eine übergeordnete Einheit und/oder des Benutzer des Elektrofahrzeugs. Solche Maßnahmen erfolgen grundsätzlich immer dann, wenn der Vergleich in Schritt 20 positiv ausfällt, da das Vorhandensein eines Fremdkörpers stets eine Störung darstellt, die je nach ihrem Ausmaß früher oder später behoben werden muss. Bei einem sehr kleinen Fremdkörper, der nur eine geringfügige Reduktion der Übertragungsleistung zur Folge hat, kann eine Anzeige ausreichend sein, die den Fahrzeugbenutzer bei der Rückkehr zum Fahrzeug auf die Störung hinweist. Bei einem großen Fremdkörper, der auch einen Notbetrieb unmöglich macht, erscheint es hingegen als notwendig, den Fahrzeugbenutzer umgehend zu alarmieren, dass das Elektrofahrzeug 1 nicht aufgeladen werden kann, beispielsweise durch ein Hupsignal oder durch Sendung einer Textnachricht an ein Mobiltelefon. Auch bei einer signifikanten Reduktion der Ladeleistung im Notbetrieb erscheint es als sinnvoll, den Benutzer auf diese Weise frühzeitig auf die Störung aufmerksam zu machen, da sie sich negativ auf die Mobilität des Fahrzeugs auswirkt.

Ein abnormal schnelles Abklingen einer elektrischen Betriebsgröße der Primärspule bei Unterbrechung der primärseitigen Leistungszufuhr kann auch durch eine thermische oder mechanische Beschädigung der Primärspule, die einen erhöhten ohmschen Wicklungswiderstand $R_P$ zur Folge hat, oder durch Defekte an Bauelementen der Abgleichschaltung 15 verursacht werden, selbst wenn kein leitfähiger Fremdkörper 11 vorhanden ist. Um diese Art von Fehler zu detektieren und vom Vorhandensein eines Fremdkörpers zu unterscheiden, ist erfindungsgemäß vorgesehen, dass nach dem Absetzen einer Meldung, die das Vorhandensein eines Fremdkörpers anzeigt, an den Fahrzeugbenutzer und/oder eine übergeordnete Stelle die Beseitigung des Fremdkörpers vom Fahrzeugbenutzer bzw. Servicepersonal durch Eingabe eines Quittungssignals an einer Eingabeeinheit bestätigt werden muss, bevor die Vorrichtung in ihren normalen Betriebszustand zurückkehrt und die Fehleranzeige zurücksetzt.

Nach Eingang eines solchen Quittungssignals wird sofort eine erneute Fremdkörpererkennung durch Messung eines Abklingvorgangs bei kurzzeitig aktivierter und dann unterbrochener primärseitiger Leistungszufuhr vorgenommen. Ergibt diese Messung wieder eine abnormal hohe Verlustleistung, so deutet dies auf einen Defekt an der Primärspule 2 öder in der Abgleichschaltung 15 hin, was dem Fahrzeugbenutzer bzw. Servicepersonal durch eine entsprechende Anzeige bzw. Fehlermeldung, die sich von der Anzeige eines Fremdkörpers unterscheidet, mitgeteilt wird. Auf diese Weise ermöglicht die Erfindung ohne signifikanten Mehraufwand auch die Erkennung von Hardwaredefekten an der Primärseite einer Vorrichtung zur induktiven Energieübertragung, insbesondere die Erkennung einer Beschädigung der Primärspule 2, die bei einer Ladestation für Elektrofahrzeuge 1 aufgrund ihrer exponierten Lage der Gefahr einer mechanischen Beschädigung ausgesetzt ist.

Aus der vorausgehenden Beschreibung ergeben sich für den Fachmann Variationsmöglichkeiten bei der Verwirklichung der Erfindung. So kann beispielsweise die Schaltungstopologie des Abgleichnetzwerks 15 unter Beibehaltung der Charakteristik eines Schwingkreises in der Kombination mit der Primärspule modifiziert und gegenüber dem hier gezeigten Beispiel erweitert werden. Ferner können bei der Berechnung der Verlustleistung Eisenverluste in Feldführungselementen berücksichtigt werden, indem bei der Verlustleistungsberechnung ein von zwei abweichender, d.h. etwas größerer Exponent des Effektivwertes $I_{Peff}$ des Stromes verwendet wird. Ferner kann die Hüllkurve bzw. der Effektivwert $I_{Peff}$ des Primärstromes $I_P$ durch messtechnisch einfach erfassbare Größen angenähert werden, beispielsweise die Hüllkurve durch die Betragsdifferenz zweier aufeinanderfolgender Spitzenwerte oder der Effektivwert durch den Gleichrichtwert, der bekanntlich proportional zum Effektivwert ist. Solche und vergleichbare Modifikationen stehen im Ermessen des Fachmannes und sollen von Schutz der Ansprüche umfasst sein.

**Patentansprüche**

1. Verfahren zur Erkennung eines elektrisch leitfähigen Fremdkörpers (11) an einer Vorrichtung zur induktiven Übertragung elektrischer Energie von einer stationären Einheit mit einer Stromversorgungseinheit (6) und einer Primärspule (2) zu einer mobilen Einheit mit einer Sekundärspule (4) und einem elektrischen Verbraucher (5), bei dem zunächst elektrische Leistung aus der Stromversorgungseinheit (6) in die Primärspule (2) eingespeist wird, diese Einspeisung unterbrochen wird und der zeitliche Verlauf des dadurch verursachten Abklingens einer elektrischen Betriebsgröße der Primärspule (2) gemessen wird, wobei mindestens ein Parameter des gemessenen Verlaufs mit einem entsprechenden Parameter eines Referenzverlaufs, der bei einer Unterbrechung der Leistungseinspeisung in die Primärspule (2) ohne Vorhandensein eines elektrisch leitfähigen Fremdkörpers (11) im Bereich des von der Primärspule (2) erzeugten Magnetfeldes ermittelt wurde, verglichen wird, wobei anhand dieses Vergleichs festgestellt wird, ob ein elektrisch leitfähiger Fremdkörper (11) im Bereich des von der Primärspule 2 erzeugten Magnetfeldes vorhanden ist, wobei bei festgestelltem Vorhandensein eines Fremdkörpers (11) aus dem zeitlichen Verlauf des Abklingens der gemessenen elektrischen Betriebsgröße ein Maß für die Leistung ermittelt wird, die durch den Fremdkörper (11) beim normalen Betrieb der Vorrichtung aufgenommen wird, und wobei anhand dieses ermittelten Maßes die in die Primärspule (2) eingespeiste Leistung so weit reduziert wird, dass die durch den Fremdkörper (11) aufgenommene Leistung unterhalb einer vorbestimmten Schwelle bleibt, **dadurch gekennzeichnet, dass** bei festgestelltem Vorhandensein eines Fremdkörpers (11) eine Anzeigeeinheit aktiviert und/oder eine Fehlermeldung an eine übergeordnete Einheit und/oder einen Benutzer der Vorrichtung abgesetzt wird und die Eingabe eines Quittungssignals, welches einen fremdkörperfreien Zustand der Vorrichtung anzeigt, durch einen Benutzer der Vorrichtung an einer Eingabeeinheit erwartet wird, dass nach Eingang des Quittungssignals eine erneute Fremdkörpererkennung durchgeführt wird und im Fall einer erneuten Feststellung des Vorhandenseins eines Fremdkörpers (11) eine Anzeigeeinheit aktiviert und/oder eine Fehlermeldung an eine übergeordnete Einheit und/oder einen Benutzer der Vorrichtung abgesetzt wird, wobei an der Anzeigeeinheit und /oder durch die Fehlermeldung anstelle eines Fremdkörpers (11) ein defekter Zustand der Vorrichtung angezeigt wird.

2. Verfahren nach Anspruch 1, **dadurch gekennzeichnet, dass** ein elektrisch leitfähiger Fremdkörper (11) dann als vorhanden festgestellt wird, wenn die Abweichung zwischen dem Parameter des gemessenen Verlaufs und dem entsprechenden Parameter des Referenzverlaufs eine vorbestimmte Schwelle überschreitet.

3. Verfahren nach Anspruch 1 oder 2, **dadurch gekennzeichnet, dass** der Parameter die relative Änderung der Hüllkurve des zeitlichen Verlaufs oder des Effektivwertes der gemessenen elektrischen Betriebsgröße innerhalb eines vorbestimmten Zeitintervalls ist, das mit oder kurz nach der Unterbrechung der Leistungseinspeisung beginnt, oder dass der Parameter die Länge eines mit der Unterbrechung der Leistungseinspeisung oder kurz danach beginnenden Zeitintervalls ist, innerhalb dessen die Hüllkurve des zeitlichen Verlaufs oder des Effektivwertes der gemessenen elektrischen Betriebsgröße eine vorbestimmte relative Änderung erreicht.

4. Verfahren nach Anspruch 1 oder 2, **dadurch gekennzeichnet, dass** der Parameter der Wert eines als Modell für einen leitfähigen Fremdkörper (11) in Serie zu der Primärspule (2) liegenden ohmschen Widerstandes $R_F$ ist, der nach der Formel

$$R_F = [2L_P /(\Delta t)] \cdot \ln [(I_{ref} \cdot I_{0F}) / (I_1 \cdot I_0)]$$

berechnet wird, worin $L_P$ der Wert der Induktivität der Primärspule (2), $\Delta t$ die Länge eines vorbestimmten Zeitintervalls, $I_0$ und $I_{0F}$ die Amplitude oder der Effektivwert des Primärstromes $I_P$ vor oder kurz nach der Unterbrechung der Leistungseinspeisung ohne Vorhandensein eines Fremdkörpers (11) bzw. bei Vorhandensein des Fremdkörpers (11) und $I_{ref}$ und $I_1$ die Werte sind, auf welche die Hüllkurve oder der Effektivwert des Primärstromes $I_P$ innerhalb des Zeitintervalls $\Delta t$ nach Unterbrechung der Leistungseinspeisung ohne Vorhandensein eines Fremdkörpers (11) bzw. bei Vorhandensein des Fremdkörpers (11) abklingt.

5. Verfahren nach einem der Ansprüche 1 bis 4, **dadurch gekennzeichnet, dass** die elektrische Betriebsgröße der Strom $I_P$ durch die Primärspule (2) oder die Spannung $U_P$ über der Primärspule (2) ist.

6. Verfahren nach einem der Ansprüche 1 bis 5, **dadurch gekennzeichnet, dass** die Einspeisung elektrischer Leistung in die Primärspule (2) unterbrochen bleibt, wenn das Maß für die durch den Fremdkörper (11) beim normalen Betrieb der Vorrichtung aufgenommene Leistung eine vorbestimmte Schwelle überschreitet.

**7.** Verfahren nach einem der Ansprüche 1 bis 6, **dadurch gekennzeichnet, dass** der in die Primärinduktivität eingespeiste Strom auf einen Wert eingestellt wird, der kleiner oder höchstens gleich einem Wert $I_{Pmax}$ ist, welcher nach der Formel

$$I_{P\max} = \sqrt{\frac{P_{F\max}}{\frac{2L_P}{\Delta t}\ln\left(\frac{I_{ref} \cdot I_{0F}}{I_1 \cdot I_0}\right)}}$$

berechnet wird, worin $P_{Fmax}$ der maximal zulässige Wert der durch den Fremdkörper (11) aufgenommenen Leistung, $L_P$ der Wert der Induktivität der Primärspule (2), $\Delta t$ die Länge eines vorbestimmten Zeitintervalls, $I_0$ und $I_{0F}$ die Amplitude oder der Effektivwert des Primärstromes $I_P$ vor oder kurz nach der Unterbrechung der Leistungseinspeisung ohne Vorhandensein eines Fremdkörpers (11) bzw. bei Vorhandensein des Fremdkörpers (11) und $I_{ref}$ und $I_1$ die Werte sind, auf welche die Hüllkurve oder der Effektivwert des Primärstromes $I_P$ innerhalb des Zeitintervalls $\Delta t$ nach Unterbrechung der Leistungseinspeisung ohne Vorhandensein eines Fremdkörpers (11) bzw. bei Vorhandensein des Fremdkörpers (11) abklingt.

**8.** Verfahren nach einem der Ansprüche 1 bis 7, **dadurch gekennzeichnet, dass** bei Anwesenheit einer mobilen Einheit mit einer Sekundärspule (4) und einem elektrischen Verbraucher (5) vor der Unterbrechung der Leistungseinspeisung in die Primärspule (2) die Leistungsabgabe von der Sekundärspule (4) an den Verbraucher (5) unterbrochen wird.

**9.** Verfahren nach Anspruch 8, **dadurch gekennzeichnet, dass** die Sekundärspule (4) kurzgeschlossen und/oder der Stromkreis zwischen der Sekundärspule (4) und dem Verbraucher (5) unterbrochen wird.

**10.** Verfahren nach einem der Ansprüche 1 bis 9, **dadurch gekennzeichnet, dass** durch die Unterbrechung der Leistungseinspeisung in die Primärspule (2) ein elektrischer Schwingkreis ohne äußere Anregung hergestellt wird, der die Primärspule (2) enthält, und dass der Verlauf der gemessenen elektrischen Betriebsgröße die Form einer abklingenden Schwingung dieses Schwingkreises hat.

**11.** Verfahren nach einem der Ansprüche 1 bis 10, **dadurch gekennzeichnet, dass** die Messung des zeitlichen Verlauf des durch die Unterbrechung der Einspeisung elektrischer Leistung in die Primärspule (2) verursachten Abklingens einer elektrischen Betriebsgröße der Primärspule (2) mittels mindestens einer benachbart zu der Primärspule (2) angeordneten Messspule erfolgt.

**12.** Vorrichtung zur induktiven Übertragung elektrischer Energie von einer stationären Einheit mit einer Stromversorgungseinheit (6) und einer Primärspule (2) zu einer mobilen Einheit mit einer Sekundärspule (4) und einem elektrischen Verbraucher (5), wobei die Vorrichtung Mittel zur Einspeisung elektrischer Leistung aus der Stromversorgungseinheit (6) in die Primärspule (2) und zur anschließenden Unterbrechung dieser Einspeisung und Mittel zur Messung des zeitlichen Verlaufs des dadurch verursachten Abklingens einer elektrischen Betriebsgröße der Primärspule (2), Mittel zum Vergleich mindestens eines Parameters des gemessenen Verlaufs mit einem entsprechenden Parameter eines Referenzverlaufs, der bei einer Unterbrechung der Leistungseinspeisung in die Primärspule (2) ohne Vorhandensein eines elektrisch leitfähigen Fremdkörpers (11) im Bereich des von der Primärspule (2) erzeugten Magnetfeldes ermittelt wurde, Mittel zur Feststellung anhand dieses Vergleichs, ob ein elektrisch leitfähiger Fremdkörper (11) im Bereich des von der Primärspule (11) erzeugten Magnetfeldes vorhanden ist, Mittel zur Ermittlung eines Maßes für die durch den Fremdkörper (11) beim normalen Betrieb der Vorrichtung aufgenommene Leistung aus dem zeitlichen Verlauf des Abklingens der gemessenen elektrischen Betriebsgröße bei festgestelltem Vorhandensein eines Fremdkörpers (11), Mittel zum Reduzieren der in die Primärspule (2) eingespeisten Leistung anhand des ermittelten Maßes bis zum Absinken der durch den Fremdkörper (11) aufgenommenen Leistung unterhalb eine vorbestimmte Schwelle, aufweist **gekennzeichnet durch** Mittel zur Aktivierung einer Anzeigeeinheit und/oder zum Absetzen einer Fehlermeldung an eine übergeordnete Einheit und/oder einen Benutzer der Vorrichtung, eine Eingabeeinheit zur Eingabe eines Quittungssignals **durch** einen Benutzer der Vorrichtung, dessen Eingabe bei festgestelltem Vorhandensein eines Fremdkörpers (11) einen fremdkörperfreien Zustand der Vorrichtung anzeigt, Mittel zur Durchführung einer erneuten Fremdkörpererkennung nach Eingang des Quittungssignals und Mittel zur Aktivierung einer Anzeigeeinheit und/oder zum Absetzen einer Fehlermeldung an eine übergeordnete Einheit und/oder einen Benutzer der Vorrichtung im Fall einer erneuten Feststellung des Vorhandenseins eines Fremdkörpers (11), wobei an der Anzeigeeinheit und/oder **durch** die Fehlermeldung anstelle eines Fremdkörpers (11) ein defekter Zustand der Vorrichtung angezeigt wird.

**Claims**

**1.** Method for detection of an electrically conductive foreign body (11) in a device for inductive transmission of electrical energy from a stationary unit with a current supply unit (6) and a primary coil (2) to a mobile unit with a secondary coil (4) and an electrical consumer (5), wherein firstly electrical power is fed from the current supply unit (6) into the primary coil (2), this feeding is interrupted and the progression over time of the decay this causes in an electrical operating magnitude of the primary coil (2) is measured, wherein at least one parameter of the measured progression over time is compared with a corresponding parameter of a reference progression which was determined with an interruption in the feeding of the power into the primary coil (2) without the presence of an electrically conductive foreign body (11) in the region of the magnetic field produced by the primary coil (2), wherein this comparison is used to establish whether an electrically conductive foreign body (11) is present in the region of the magnetic field produced by the primary coil (2), wherein when the presence of a foreign body (11) is established from the progression over time of the decay in the measured electrical operating magnitude a measurement is determined for the power which has been absorbed by the foreign body (11) during the normal operation of the device, and wherein by reference to this determined measurement the power fed into the primary coil (2) is reduced so much that the power absorbed by the foreign body (11) remains below a predetermined threshold, **characterised in that** when the presence of a foreign body (11) is established an indicating unit is activated and/or an error message is sent to a higher ranking unit and/or a user of the device and the inputting of an acknowledgement signal indicating a foreign body-free state of the device is expected by a user of the device at an inputting unit, **in that** after receipt of the acknowledgement signal a renewed foreign body recognition operation is carried out and in the event of renewed establishment of the presence of a foreign body (11) an indicating unit is activated and/or an error message is sent to a higher ranking unit and/or a user of the device, wherein a faulty state of the device is indicated at the indicating unit and/or by the error message instead of a foreign body (11).

2. Method according to claim 1, **characterised in that** an electrically conductive foreign body (11) is established as being present when the difference between the parameter of the measured progression and the corresponding parameter of the reference progression exceeds a predetermined threshold.

3. Method according to claim 1 or 2, **characterised in that** the parameter is the relative change in the envelope curve of the progression over time or the effective value of the measured electrical operating magnitude within a predetermined interval of time which begins at or shortly after the interruption in the feeding of the power, or **in that** the parameter is the length of an interval of time beginning at the interruption of the feeding of the power or shortly thereafter within which the envelope curve of the progression over time or the effective value of the measured electrical operating magnitude reaches a predetermined relative change.

4. Method according to claim 1 or 2, **characterised in that** the parameter is the value of an ohmic resistance $R_F$ serving as a model for a conductive foreign body (11) lying in series with the primary coil (2) and calculated according to the formula

$$R_F = [2L_P / (\Delta t)] \cdot \ln \left[ (I_{ref} \cdot I_{0F}) / (I_1 \cdot I_0) \right]$$

in which $L_P$ is the value of the inductance of the primary coil (2), $\Delta t$ is the length of a predetermined interval of time, $I_0$ and $I_{0F}$ are the amplitude or the effective value of the primary current $I_P$ before or shortly after the interruption in the feeding of the power without the presence of a foreign body (11) and in the presence of the foreign body (11) respectively and $I_{ref}$ and $I_1$ are the values to which the envelope curve or the effective value of the primary current $I_P$ decays within the interval of time $\Delta t$ after the interruption of the feeding of the power without the presence of a foreign body (11) and in the presence of the foreign body (11) respectively.

5. Method according to one of claims 1 to 4, **characterised in that** the electrical operating magnitude is the current $I_P$ through the primary coil (2) or the voltage $U_P$ across the primary coil (2).

6. Method according to one of claims 1 to 5, **characterised in that** the feeding of the electrical power into the primary coil (2) remains interrupted if the measurement for the power absorbed by the foreign body (11) during the normal operation of the device exceeds a predetermined threshold.

7. Method according to one of claims 1 to 6, **characterised in that** the current fed into the primary inductance is set to a value which is less than or at most equal to a value $I_{Pmax}$ which is calculated according to the formula

$$I_{P\max} = \sqrt{\dfrac{P_{F\max}}{\dfrac{2L_P}{\Delta t} \ln\left(\dfrac{I_{ref} \cdot I_{0F}}{I_1 \cdot I_0}\right)}}$$

in which $P_{Fmax}$ is the maximum permissible value of the power absorbed by the foreign body (11), $L_P$ is the value of the inductance of the primary coil (2), $\Delta t$ is the length of a predetermined interval of time, $I_0$ and $I_{0F}$ are the amplitude or the effective value of the primary current $I_P$ before or shortly after the interruption in the feeding of the power without the presence of a foreign body (11) and in the presence of the foreign body (11) respectively and $I_{ref}$ and $I_1$ are the values to which the envelope curve or the effective value of the primary current $I_P$ decays within the interval of time $\Delta t$ after the interruption in the feeding of the power without the presence of a foreign body (11) and in the presence of the foreign body (11) respectively.

8. Method according to one of claims 1 to 7, **characterised in that** in the presence of a mobile unit with a secondary coil (4) and an electrical consumer (5) before the interruption of the feeding of the power into the primary coil (2) the delivery of power from the secondary coil (4) to the consumer (5) is interrupted.

9. Method according to claim 8, **characterised in that** the secondary coil (4) is short-circuited and/or the circuit between the secondary coil (4) and the consumer (5) is broken.

10. Method according to one of claims 1 to 9, **characterised in that** the interruption in the feeding of the power into the primary coil (2) produces a resonant electrical circuit without any external excitation which includes the primary coil (2), and **in that** the progression of the measured electrical magnitude has the form of a decaying oscillation of this resonant circuit.

11. Method according to one of claims 1 to 10, **characterised in that** the measurement of the progression over time of the decay in an electrical operating magnitude caused by the interruption in the feeding of the electrical power into the primary coil (2) is effected by means of at least one measuring coil arranged adjacent to the primary coil (2).

12. Device for inductive transmission of electrical energy from a stationary unit with a current supply unit (6) and a primary coil (2) to a mobile unit with a secondary coil (4) and an electrical consumer (5), wherein the device comprises means for feeding electrical power from the current supply unit (6) into the primary coil (2) and for subsequent interruption of this feeding and means for measurement of the progression over time of the decay this causes in an electrical operating magnitude of the primary coil (2), means for comparison of at least one parameter of the measured progression with a corresponding parameter of a reference progression which was determined with an interruption in the feeding of the power into the primary coil (2) without the presence of an electrically conductive foreign body (11) in the region of the magnetic field produced by the primary coil (2), means for establishing by reference to this comparison whether an electrically conductive foreign body (11) is present in the region of the magnetic field produced by the primary coil (2), means for determining a measurement for the power absorbed by the foreign body (11) during the normal operation of the device from the progression over time of the decay in the measured electrical operating magnitude when the presence of a foreign body (11) is established, and means for reducing the power fed into the primary coil (2) by reference to the measurement determined until the power absorbed by the foreign body (11) falls below a predetermined threshold, **characterised by** means for activating an indicating unit and/or for sending an error message to a higher ranking unit and/or a user of the device, an inputting unit for inputting of an acknowledgement signal by a user of the device, the inputting of which when the presence of a foreign body (11) has been established indicates a foreign body-free state of the device, means for carrying out a renewed foreign body recognition operation after delivery of the acknowledgement signal and means for activating an indicating unit and/or for sending an error message to a higher ranking unit and/or a user of the device in the event of renewed establishment of the presence of a foreign body (11), wherein a faulty state of the device is indicated at the indicating unit and/or by the error message instead of a foreign body (11).

## Revendications

1. Procédé pour l'identification d'un corps étranger (11) électroconducteur au niveau d'un dispositif pour le transfert inductif d'énergie électrique d'une unité stationnaire avec une unité d'alimentation en courant (6) et une bobine primaire (2) vers une unité mobile avec une bobine secondaire (4) et un consommateur électrique (5), où une puissance électrique est tout d'abord injectée à partir de l'unité d'alimentation en courant (6) dans la bobine primaire (2), cette injection est interrompue et la variation dans le temps de la diminution ainsi provoquée d'une valeur de fonctionnement électrique de la bobine primaire (2) est mesurée, dans lequel au moins un paramètre de la variation mesurée est comparé avec un paramètre correspondant d'une variation de référence qui a été détectée lors d'une interruption de l'injection de puissance dans la bobine primaire (2) sans présence d'un corps étranger électroconducteur (11) dans la zone du champ magnétique généré par la bobine primaire (2), dans lequel il est vérifié, à l'aide de cette comparaison, si un corps étranger électroconducteur (11) est présent dans la zone du champ magnétique généré par la bobine primaire (2),dans lequel, en cas de présence vérifiée d'un corps étranger (11), une grandeur pour la puissance est déterminée à partir de la variation dans le temps de la diminution de la valeur de fonctionnement électrique mesurée, laquelle puissance est consommée par le corps étranger (11) lors du fonctionnement normal du dispositif, et dans lequel, à l'aide de cette grandeur déterminée, la puissance injectée dans la bobine primaire (2) est réduite à un point tel que la puissance consommée par le corps étranger (11) reste en deçà d'un seuil prédéterminé, **caractérisé en ce que**, en cas de présence vérifiée d'un corps étranger (11), une unité d'affichage est activée et/ou un message d'erreur est envoyé à une unité d'ordre supérieur et/ou à un utilisateur du dispositif et la saisie d'un signal d'acquittement, lequel indique un état sans corps étranger du dispositif, par l'utilisateur du dispositif est attendue au niveau d'une unité de saisie, **en ce que**, après l'entrée du signal d'acquittement, une nouvelle identification de corps étranger est exécutée et, dans le cas de la présence à nouveau vérifiée d'un corps étranger (11), une unité d'affichage est activée et/ou un message d'erreur est envoyé à une unité d'ordre supérieur et/ou à un utilisateur du dispositif, dans lequel, au niveau de l'unité d'affichage et/ou grâce au message d'erreur, un état défectueux du dispositif est indiqué au lieu d'un corps étranger (11).

2. Procédé selon la revendication 1, **caractérisé en ce qu'**un corps étranger électroconducteur (11) est alors vérifié comme étant présent si la différence entre le paramètre de la variation mesurée et le paramètre correspondant de la variation de référence dépasse un seuil prédéterminé.

3. Procédé selon la revendication 1 ou 2, **caractérisé en ce que** le paramètre est la modification relative de l'enveloppante de la variation dans le temps ou de la valeur réelle de la valeur de fonctionnement électrique mesurée dans les limites d'un intervalle de temps prédéterminé, lequel commence avec l'interruption de l'injection de puissance ou juste après celle-ci, ou bien **en ce que** le paramètre est la longueur d'un intervalle de temps commençant avec l'interruption de l'injection de puissance ou juste après celle-ci, dans les limites duquel l'enveloppante de la variation dans le temps ou de la valeur réelle de la valeur de fonctionnement électrique mesurée atteint une modification relative prédéterminée.

4. Procédé selon la revendication 1 ou 2, **caractérisé en ce que** le paramètre est la valeur d'une résistance ohmique $R_F$, en tant que modèle pour un corps étranger électroconducteur (11), en série avec la bobine primaire (2), laquelle est calculée selon la formule $R_F = [2L_P/ (\Delta t)] \cdot \ln[(I_{ref} \cdot I_{0f})/(I_1 \cdot I_0)]$, où $L_P$ est la valeur de l'inductance de la bobine primaire (2), $\Delta t$ est la longueur d'un intervalle de temps prédéterminé, $I_0$ et $I_{0F}$ sont l'amplitude ou la valeur réelle du courant primaire $I_P$ avant ou juste après l'interruption de l'injection de puissance sans présence d'un corps étranger (11) ou en cas de présence du corps étranger (11) et $I_{ref}$ et $I_1$ sont les valeurs auxquelles diminue l'enveloppante ou la valeur réelle du courant primaire $I_P$ dans les limites de l'intervalle de temps $\Delta t$ après l'interruption de l'injection de puissance sans présence d'un corps étranger (11) ou en cas de présence du corps étranger (11).

5. Procédé selon l'une des revendications 1 à 4, **caractérisé en ce que** la valeur de fonctionnement électrique est le courant $I_P$ à travers la bobine primaire (2) ou la tension $U_P$ à la bobine primaire (2).

6. Procédé selon l'une des revendications 1 à 5, **caractérisé en ce que** l'injection de puissance électrique dans la bobine primaire (2) reste interrompue lorsque la grandeur pour la puissance consommée par le corps étranger (11) en cas de fonctionnement normal du dispositif dépasse un seuil prédéterminé.

7. Procédé selon l'une des revendications 1 à 6, **caractérisé en ce que** le courant injecté dans l'inductance primaire est régulé à une valeur qui est inférieure ou au maximum égale à une valeur $I_{Pmax}$, laquelle est calculée selon la formule

$$I_{P.max} = \sqrt{\dfrac{P_{F\max}}{\dfrac{2L_P}{\Delta t}\ln\left(\dfrac{I_{ref} \cdot I_{0F}}{I_1 \cdot I_0}\right)}}$$

où $P_{Fmax}$ est la valeur maximale autorisée de la puissance consommée par le corps étranger (11), $L_P$ est la valeur de l'inductance de la bobine primaire (2), $\Delta t$ est la longueur d'un intervalle de temps prédéterminé, $I_0$ et $I_{0F}$ sont l'amplitude ou la valeur réelle du courant primaire $I_P$ avant ou juste après l'interruption de l'injection de puissance sans présence d'un corps étranger (11) ou en cas de présence du corps étranger (11) et $I_{ref}$ et $I_1$ sont les valeurs auxquelles diminue l'enveloppante ou la valeur réelle du courant primaire $I_P$ dans les limites de l'intervalle de temps $\Delta t$ après l'interruption de l'injection de puissance sans présence d'un corps étranger (11) ou en cas de présence du corps étranger (11).

8. Procédé selon l'une des revendications 1 à 7, **caractérisé en ce que**, en cas de présence d'une unité mobile avec une bobine secondaire (4) et un consommateur électrique (5), avant l'interruption de l'injection de puissance dans la bobine primaire (2), le débit de puissance depuis la bobine secondaire (4) vers le consommateur (5) est interrompu.

9. Procédé selon la revendication 8, **caractérisé en ce que** la bobine secondaire (4) est court-circuitée et/ou **en ce que** le circuit électrique entre la bobine secondaire (4) et le consommateur (5) est interrompu.

10. Procédé selon l'une des revendications 1 à 9, **caractérisé en ce que**, grâce à l'interruption de l'injection de puissance dans la bobine primaire (2), un circuit électrique oscillant est produit sans excitation extérieure, lequel circuit contient la bobine primaire (2), et **en ce que** la variation de la valeur de fonctionnement électrique mesurée a la forme d'une oscillation diminuant de ce circuit oscillant.

11. Procédé selon l'une des revendications 1 à 10, **caractérisé en ce que** la mesure de la variation dans le temps de la diminution d'une valeur de fonctionnement électrique de la bobine primaire (2) provoquée par l'interruption de l'injection de puissance électrique dans la bobine primaire (2) s'effectue au moyen d'au moins une bobine de mesure disposée au voisinage de la bobine primaire (2).

12. Dispositif pour le transfert inductif d'énergie électrique d'une unité stationnaire avec une unité d'alimentation en courant (6) et une bobine primaire (2) à une unité mobile avec une bobine secondaire (4) et un consommateur électrique (5), dans lequel le dispositif présente des moyens pour injecter une puissance électrique à partir de l'unité d'alimentation en courant (6) dans la bobine primaire (2) et pour interrompre consécutivement cette injection et des moyens pour mesurer la variation dans le temps de la diminution ainsi provoquée d'une valeur de fonctionnement électrique de la bobine primaire (2), des moyens pour comparer au moins un paramètre de la variation mesurée avec un paramètre correspondant d'une variation de référence, laquelle a été déterminée lors d'une interruption de l'injection de puissance dans la bobine primaire (2) sans présence d'un corps étranger électroconducteur (11) dans la zone du champ magnétique généré par la bobine primaire (2), des moyens pour vérifier, à l'aide de cette comparaison, si un corps étranger électroconducteur (11) est présent dans la zone du champ magnétique généré par la bobine primaire (11), des moyens pour déterminer une grandeur pour la puissance consommée par le corps étranger (11) lors du fonctionnement normal du dispositif à partir de la variation dans le temps de la diminution de la valeur de fonctionnement électrique mesurée en cas de présence vérifiée d'un corps étranger (11), des moyens pour réduire la puissance injectée dans la bobine primaire (2) à l'aide de la grandeur déterminée jusqu'à la baisse de la puissance consommée par le corps étranger (11) en deçà d'un seuil prédéterminé, **caractérisé par** des moyens pour activer une unité d'affichage et/ou pour envoyer un message d'erreur à une unité d'ordre supérieur et/ou à un utilisateur du dispositif, une unité de saisie pour la saisie d'un signal d'acquittement par un utilisateur du dispositif, dont la saisie, en cas de présence vérifiée d'un corps étranger (11), indique un état sans corps étranger du dispositif, des moyens pour exécuter une nouvelle identification de corps étranger après l'entrée du signal d'acquittement et des moyens pour activer une unité d'affichage et/ou pour envoyer un message d'erreur à une unité d'ordre supérieur et/ou à un utilisateur du dispositif dans le cas de la présence à nouveau vérifiée d'un corps étranger (11), dans lequel, au niveau du dispositif d'affichage et/ou grâce au message d'erreur, un état défectueux du dispositif est indiqué au lieu d'un corps étranger (11).

**Fig. 1**

**Fig. 2**

**Fig. 3**

Fig. 4

Fig. 5

Fig. 6

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009081115 A1
- WO 2005109598 A1
- WO 2005109597 A1